# EUROPÄISCHE PATENTSCHRIFT

(11) **EP 4 237 268 B1**
(45) Veröffentlichungstag und Bekanntmachung des Hinweises auf die Patenterteilung: **10.12.2025**
(21) Anmeldenummer: 21790829.2
(22) Anmeldetag: 08.10.2021
(51) Int. Cl.: B60K 1/04, B62D 21/15

(54) **ENERGIESPEICHER-BODENGRUPPE FÜR EIN ELEKTRISCH ANTREIBBARES KRAFTFAHRZEUG**
ENERGY STORAGE FLOOR ASSEMBLY FOR AN ELECTRICALLY DRIVABLE MOTOR VEHICLE
ENSEMBLE PLANCHER DE STOCKAGE D'ÉNERGIE POUR VÉHICULE AUTOMOBILE À ENTRAÎNEMENT ÉLECTRIQUE

(30) Priorität: 30.10.2020 DE 102020128605
(43) Veröffentlichungstag der Anmeldung: 06.09.2023
(73) Patentinhaber: Bayerische Motoren Werke Aktiengesellschaft, 80809 München (DE)
(72) Erfinder: KECALEVIC, Nermin, 85570 Markt Schwaben (DE); BOECK, Alexander, 81825 München (DE)
(86) Internationale Anmeldenummer: PCT/EP2021/077807
(87) Internationale Veröffentlichungsnummer: WO 2022/089914

(56) Entgegenhaltungen:
- EP-A1- 3 590 792
- CN-A- 111 376 983
- DE-A1- 102017 102 699
- DE-A1- 102018 132 257
- JP-A- H07 117 725
- US-A- 5 555 950
- US-A1- 2019 322 164

## Beschreibung

Die Erfindung betrifft eine Energiespeicher-Bodengruppe für ein elektrisch antreibbares Kraftfahrzeug, gemäß dem Oberbegriff des Patentanspruchs 1.

Eine derartige Energiespeicher-Bodengruppe für ein elektrisch antreibbares Kraftfahrzeug ist bereits in der noch unveröffentlichten deutschen Patentanmeldung der Anmelderin mit dem Aktenzeichen 10 2020 102 480.0 beschrieben, als unterseitig eines Fahrzeugbodens angeordnetes Speichergehäuse, in welchem eine elektrische Energiespeichereinrichtung aufgenommen ist, wobei innerhalb des Speichergehäuses wenigstens ein Längsträger angeordnet ist, welcher an einem Ende zumindest mittelbar mit einem im Bereich einer Vorderbaustruktur angeordneten Trägerbauteil des Kraftfahrzeugs verbunden ist. Dies dient gegenüber älterem Stand der Technik, wie der EP 2 468 609 A1, dazu, eine hinreichende Steifigkeit der Karosseriestruktur im Bereich des Fahrzeugbodens und einer Sicherheitsfahrgastzelle zu schaffen, ohne ein großes Mehrgewicht der Kraftfahrzeugkarosserie und Bauraumeinschränkungen im Innenraum der Sicherheitsfahrgastzelle hinnehmen zu müssen, was auch zusätzlich die Ergonomie innerhalb der Sicherheitsfahrgastzelle beeinträchtigen würde.

US 5,555,950 offenbart ein Elektrofahrzeug, das einen Batterieträger zur Aufnahme einer Batterie aufweist, der an einer Fahrzeugkarosserie davon angeordnet ist. Insbesondere betrifft sie eine Karosseriestruktur und eine batterietragende Struktur für das Elektrofahrzeug.

DE 10 2017 102 699 A1 offenbart einen Batterieträger zur Anordnung an einem Elektrokraftfahrzeug.

Deshalb ist es Aufgabe der vorliegenden Erfindung, eine solche Energiespeicher-Bodengruppe so weiterzubilden, dass diese in einem Crashfall, bei dem ein Vorderachsträger zum Abbauen von Deformationsenergie beansprucht wird, letzteren dazu in die Lage versetzt, ohne dass der Hochvoltspeicher bzw. die Speicherzellen beschädigt werden.

Diese Aufgabe wird erfindungsgemäß durch eine Energiespeicher-Bodengruppe mit den Merkmalen des Patentanspruchs 1 gelöst. Vorteilhafte Ausführungen der Erfindung beschreiben die abhängigen Ansprüche.

Eine Energiespeicher-Bodengruppe für ein Kraftfahrzeug mit einem elektrischen Antrieb, der eine elektrische Energiespeichereinrichtung umfasst, welche in einem Speichergehäuse aufgenommen und unterseitig eines Fahrzeugbodens angeordnet ist, wobei innerhalb des Speichergehäuses wenigstens ein Längsträger angeordnet ist, dessen, in Fahrzeugrichtung gesehen, vorderes Ende wenigstens mittelbar mit einem im Bereich einer Vorderbaustruktur angeordneten Querträgerbauteil verbunden ist, an dem auch ein Vorderachsträger angebracht ist, wobei zwischen einem rückwärtigen Bereich des Vorderachsträgers und dem vorderen Ende des Längsträgers ein Lastübertragungselement eingebracht ist, das an seinem vorderen Ende einen vorderen Abstützbereich und an seinem hinteren Ende einen hinteren Abstützbereich aufweist, wobei bei einer unfallbedingten Rückbewegung des Vorderachsträgers, infolge einer Kollision, dieser am vorderen Abstützbereich des Lastübertragungselements abstützbar ist, dessen hinterer Abstützbereich wenigstens mittelbar am Längsträger abstützbar ist, wobei der Vorderachsträger wenigstens aus zwei Vorderachslängsträgern besteht, wovon jeweils einer, jeweils einer Fahrzeugseite zugeordnet, über zwei Befestigungsstellen an dem Querträgerbauteil angebracht ist, wobei jeweils eine Befestigungsstelle dem vorderen Abstützbereich des Lastübertragungselements in Fahrzeuglängsrichtung gegenübersteht.

Das hat den Vorteil, dass der Vorderachsträger nicht direkt mit der Energiespeicher Bodengruppe verschraubt ist, sich allerdings im Falle seiner crashbedingten Verlagerung nach hinten an jedem Längsträger im Speichergehäuse über das jeweilige Lastübertragungselement abstützt und so eine weitere crashenergieabbauende Verformung des Vorderachsträgers einsetzen kann, zum Abbau einer Restcrashenergie, die ohne Lastübertragungselemente unter Umständen aufgrund nicht gesteuerter Verformungswege des Vorderachsträgers, diesen an einer anderen Stelle als der Position der jeweiligen Längsträger auf die Energiespeicher Bodengruppe hätte auftreffen lassen. So werden vorteilhafterweise konstruktiv und sicherheitstechnisch sehr günstige Abstützpositionen des Vorderachsträgers an allen Längsträgern im Speichergehäuse gewährleistet und eine crashtechnisch günstige Verformung des Vorderachsträgers für maximalen Energieabbau erst ermöglicht, so dass der Vorderachsträger durch die Abstützung über die Lastübertragungselemente mehr Lastniveau aufbauen kann.

In diesem Zusammenhang ist auch besonders vorteilhaft, wenn der wenigstens eine Längsträger unterseitig an dem Fahrzeugboden befestigt ist. Somit kann jeder Längsträger in optimaler Weise zur Abstützung der Lastübertragungselemente herangezogen werden, indem er in optimaler Weise einen Kraft- beziehungsweise Lastpfad unterhalb der Sicherheitsfahrgastzelle ausbildet. Auch kann der wenigstens eine Längsträger unmittelbar mit einem Querträgerbauteil verbunden sein. Hierdurch lassen sich Kräfte, beispielsweise aus dem Vorderbaustrukturbereich des Kraftfahrzeugs in optimaler Weise in Fahrzeuglängsrichtung nach hinten hin abstützen und übertragen.

Eine weitere Ausführungsform der Erfindung sieht vor, dass zwischen einem vorderen Abstützbereich jedes Lastübertragungselements und dem Vorderachsträger oder einer Vorderachsträgerbefestigung, in Fahrzeuglängsrichtung ein Spalt, insbesondere 5 bis 10 Millimeter Abstand, vorgesehen ist. Durch einen solchen Spalt, in Längsrichtung des Kraftfahrzeugs, zwischen Vorderachsträger und Lastübertragungselement, mit hinter diesem liegenden Längsträgern des Hochvoltspeichers, wird auch vorteilhafterweise eine getrennte Montage von Vorderachsträger und Hochvoltspeicher möglich. Das Lastübertragungselement ist am Hochvoltspeicher direkt angebunden und in Fahrzeuglängsrichtung nach hinten sind hochvoltspeicherinterne Längsträger, die Crashlasten abstützen können. So wird die durch Verformung des Vorderachsträgers auf die Lastübertragungselemente durch Formschluss übertragene Kraft genau in die Längsträger des Hochvoltspeichers übertragen und der Kraftfluss dort durch dessen Anbindung an die Karosseriestruktur weitergeleitet. Die Lastübertragungselemente verhindern somit eine weitere Rückwärtsverlagerung des Vorderachsträgers in Richtung Hochvoltspeicher, durch Abstützung am Längsträger und verhindern somit auch eine Intrusion der Struktur in die Batteriezellen des Hochvoltspeichers.

Erfindungsgemäß wird dies besonders wirkungsvoll und konstruktiv auf einfache Weise dadurch erreicht, dass der Vorderachsträger wenigstens aus zwei Vorderachslängsträgern besteht, wovon jeweils einer, jeweils einer Fahrzeugseite zugeordnet, über zwei Befestigungsstellen am Querträgerbauteil angebracht ist, wobei jeweils wenigstens eine Befestigungsstelle einem vorderen Abstützbereich eines Lastübertragungselements in Fahrzeuglängsrichtung gegenübersteht. Dazu kann zum Beispiel, besonders einfach und für die Montage effektiv, jedes Lastübertragungselement, insbesondere mittels einer Fügeverbindung, insbesondere durch Schweißen oder aber mittels einer Schraub- oder Nietverbindung, am Bodenelement des Speichergehäuses befestigt sein, in Längsrichtung des Kraftfahrzeugs sich erstreckend, mit Spiel zum Achsträger oder zu einer Achsträgerbefestigung platziert und nach hinten auf einen im Hochvoltspeicher integrierten Längsträger gerichtet.

Die Erfindung wird nun anhand eines bevorzugten Ausführungsbeispiels unter Bezugnahme auf die Zeichnung dargestellt. Es zeigen:
- Fig. 1:: eine Perspektivansicht eines Kraftfahrzeug-Teil-Vorderbaus nach der Erfindung, von unten auf Achsträger und Bodenelement einer Energiespeicher-Bodengruppe gerichtet und
- Fig. 2:: eine Teil-Längsschnittdarstellung aus Figur 1, entlang der Schnittlinie A - A, in größerem Maßstab, des, in Fahrtrichtung gesehen, hinteren Bereichs des Achsträgers und des vorderen Bereichs der Energiespeicher-Bodengruppe.

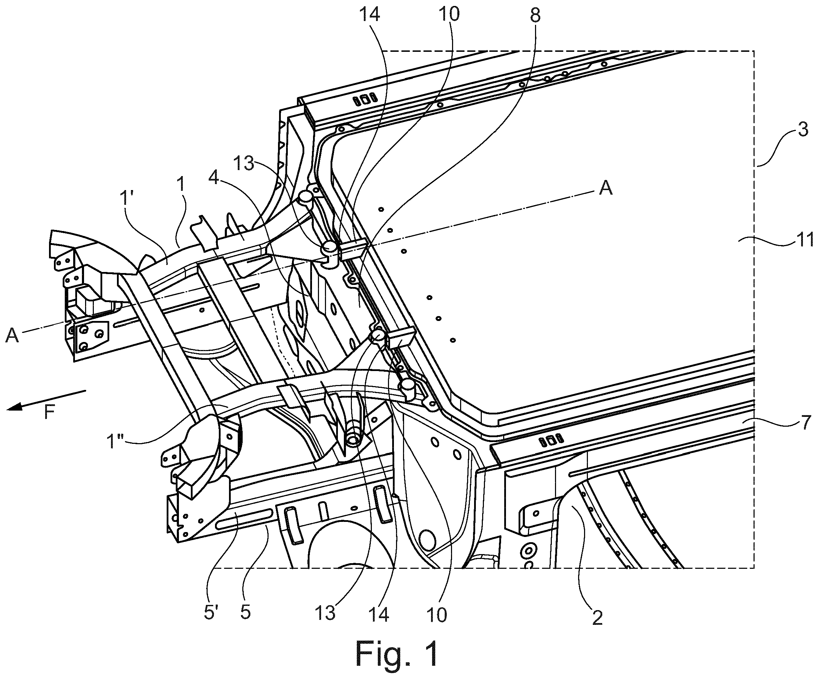

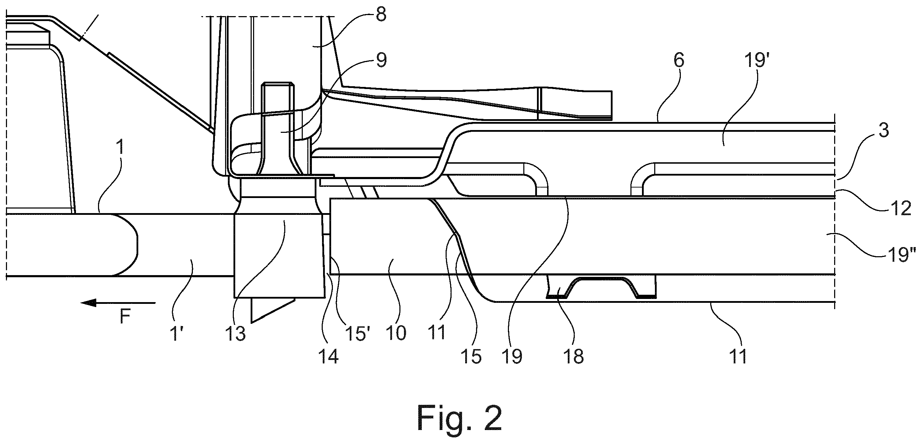

In einer Draufsicht, von unten auf einen Vorderachsträger 1 eines Kraftfahrzeugs, zeigt Figur 1, in Fahrtrichtung F des Kraftfahrzeugs gesehen, von einer Karosseriestruktur 2 umfasst, eingebaut in diese, eine Energiespeicher-Bodengruppe 3 für das elektrisch angetriebene Kraftfahrzeug. Von der Karosseriestruktur 2 sichtbar, sind hier eine vordere Stirnwand 4 einer Fahrgastzelle, an welche sich nach vorne hin eine Vorbaustruktur 5 anschließt und die nach unten hin durch ein Querträgerbauteil 8 fortgesetzt wird. Die Vorbaustruktur 5 umfasst beispielsweise vordere Längsträger, beziehungsweise Motorträger 5', einer mittleren Längsträgerebene. Nach hinten geht die Stirnwand 4 über das Querträgerbauteil 8, wie in Figur 2 sichtbar, in einen Fahrzeugboden 6 über, welcher eine Fahrgastzelle nach unten hin begrenzt und zur Seite bis zu Seitenschwellern 7 reicht (Fig. 1), die in Fahrzeuglängsrichtung verlaufen.

Unterhalb des Fahrzeugbodens 6, bildet, gemeinsam mit diesem, ein Bodenelement 11 einen Hohlraum, der Gehäuseteile eines mehrteiligen Speichergehäuses 12 enthält und zur Aufnahme von nicht gezeichneten Batteriemodulen einer elektrischen Energiespeichereinrichtung dient. Der Fahrzeugboden 6 und das Bodenelement 11 sind, wie in Fig. 2 erkennbar, miteinander verbunden, wobei eine nicht gezeichnete außenumfangsseitig umlaufende gasdichte Verbindung vorgesehen sein kann.

Das Speichergehäuse 12 ist also, unterhalb des Fahrzeugbodens 6 gebildet, zusammen mit diesem als obere Wand und von unten durch das Bodenelement 11 verschlossen.

Zur Aussteifung und zur Befestigung der Batteriemodule, sind im Speichergehäuse 12 parallel zueinander verlaufende Längsträger 19 und Querträger 18 eingebaut, wobei jeder Längsträger 19 aus zwei übereinander verlaufenden, miteinander verbindbaren und voneinander lösbaren Längsträgerteilen 19', 19", mit Schraubverbindung zum Bodenelement 11 besteht, einem oberen Längsträgerteil 19', mit dem Fahrzeugboden 6 verbunden und einem unteren Längsträgerteil 19", mit dem Bodenelement 11 verbunden. Das untere Längsträgerteil 19" verläuft zwischen den Zellmodulen und reicht, in Fahrtrichtung nach vorne, bis an die Stirnseite des Speichergehäuses 12, an das Bodenelement 11 heran.

Außerhalb des Bodenelements 11, ist an diesem ein Lastübertragungselement 10 so angeschweißt, dass letzteres das untere Längsträgerteil 19" in Fahrzeuglängsrichtung nach vorne, außerhalb der Bodenwanne 11, fortsetzt und sich deshalb mit einem hinteren Abstützbereich 15 wenigstens deckungsgleich mit dem unteren Längstragerteil 19" an der Bodenwanne 11 abstützt und somit im Crashfall ein Kraftfluss vom Vorderachsträger 1 über das Lastübertragungselement 10 und die Bodenwanne 11 in das untere Längsträgerteil 19" entsteht, wenn Last aus einer Verschiebung oder Verformung des Vorderachsträgers 1 auf einen vorderen Abstützbereich 15' des Lastübertragungselements 10 aufgebracht wird.

Die gerade Verbindung nach vorne, der unteren Längsträgerteile 19" über die Bodenwanne 11 und die Abstützbereiche 15, 15' des Lastübertragungselements 10, hin zu einer Achsträgerverschraubungsbuchse 13, mit der der hintere Bereich des Vorderachsträgers 1 über einen Achsträgerbolzen 9 am Querträgerbauteil 8 angebunden ist, besitzt zwischen dem vorderen Abstützbereich 15' des Lastübertragungselements 10 und der Achsträgerverschraubungsbuchse 13 einen Spalt 14 mit einer Spaltweite von 5 Millimetern, einerseits um eine getrennte Montage von Vorderachsträger 1 und Speichergehäuse 12 zu ermöglichen und andererseits um dem Vorderachsträger im Frontal - Crashfall einen bestimmten freien Verformungsbereich zu geben, ohne dass sofort weitere, entgegen der Fahrtrichtung F, also nach hinten nachfolgende Bauteile, im Bodenbereich in Mitleidenschaft gezogen werden. Andernfalls wird der Spalt 14 durch Verschieben des Achsträgers 1 komplett verschlossen, indem sich die Achsträgerverschraubungsbuchse 13 an den vorderen Abstützbereich 15' des Lastübertragungselements 10 anlegt und dieses den Kraftfluss aus dem Vorderachsträger 1 aufnimmt und über seinen hinteren Abstützbereich 15, mittels der Wandung der Bodenwanne 11, in den unteren Längsträgerteil 19" einleitet, von wo aus der Kraftfluss über den oberen Längsträgerteil 19' in den Fahrzeugboden 6 und in die Karosserie eingeleitet wird.

In Figur 1 sind zwei Lastübertragungselemente 10 eingesetzt, da der Vorderachsträger 1 aus zwei Längsträgern 1', 1" besteht, wovon jeweils einer, jeweils einer Fahrzeugseite zugeordnet, über zwei Befestigungsstellen mit Achsträgerverschraubungsbuchsen 13 an am Querträgerbauteil 8 angebracht ist. Jeweils eine Befestigungsstelle davon, die fahrzeuginnere, steht einem vorderen Abstützbereich 15' eines Lastübertragungselements 10 in Fahrzeuglängsrichtung gegenüber.

## Patentansprüche

1. Energiespeicher-Bodengruppe für ein Kraftfahrzeug mit einem elektrischen Antrieb, der eine elektrische Energiespeichereinrichtung umfasst, welche in einem Speichergehäuse (12) aufgenommen und unterseitig eines Fahrzeugbodens (6) angeordnet ist, wobei innerhalb des Speichergehäuses (12) wenigstens ein Längsträger (19) angeordnet ist, dessen, in Fahrzeuglängsrichtung (F) gesehen, vorderes Ende wenigstens mittelbar mit einem im Bereich einer Vorbaustruktur (5) angeordneten Querträgerbauteil (8) verbunden ist, an dem auch ein Vorderachsträger (1) angebracht ist, wobei zwischen einem rückwärtigen Bereich des Vorderachsträgers (1) und dem vorderen Ende des Längsträgers (19) ein Lastübertragungselement (10) eingebracht ist, das an seinem vorderen Ende einen vorderen Abstützbereich (15') und an seinem hinteren Ende einen hinteren Abstützbereich (15) aufweist, wobei bei einer unfallbedingten Rückbewegung des Vorderachsträgers (1), infolge einer Kollision, letzterer am vorderen Abstützbereich (15') des Lastübertragungselements (10) abstützbar ist, dessen hinterer Abstützbereich (15) wenigstens mittelbar am Längsträger (19) abstützbar ist, wobei der Vorderachsträger (1) wenigstens aus zwei Vorderachslängsträgern (1', 1") besteht, wovon jeweils einer, jeweils einer Fahrzeugseite zugeordnet, über zwei Befestigungsstellen an dem Querträgerbauteil (8) angebracht ist, wobei jeweils eine Befestigungsstelle dem vorderen Abstützbereich (15') des Lastübertragungselements (10) in Fahrzeuglängsrichtung gegenübersteht.

2. Energiespeicher-Bodengruppe nach Anspruch 1, **dadurch gekennzeichnet, dass** zwischen vorderem Abstützbereich (15') jedes Lastübertragungselements (10) und dem Vorderachsträger (1) oder einer Vorderachsträgerbefestigung, in Fahrzeuglängsrichtung ein Spalt, insbesondere 5 bis 10 Millimeter Abstand, vorgesehen ist.

3. Energiespeicher-Bodengruppe nach einem der Ansprüche 1 bis 2, **dadurch gekennzeichnet, dass** jedes Lastübertragungselement (10), insbesondere mittels einer Fügeverbindung, an einem Bodenelement (11) des Speichergehäuses (12) angebracht ist.

## Claims

1. Energy storage floor assembly for a motor vehicle with an electric drive, which comprises an electrical energy storage device that is accommodated in a storage housing (12) and arranged on the underside of a vehicle floor (6), wherein at least one longitudinal member (19) is arranged within the storage housing (12), whose front end, viewed in the vehicle longitudinal direction (F), is at least indirectly connected to a cross-member component (8) arranged in the area of a front-end structure (5), to which a front axle carrier (1) is also attached, wherein a load transfer element (10) is introduced between a rear area of the front axle carrier (1) and the front end of the longitudinal member (19), which has a front support area (15') at its front end and a rear support area (15) at its rear end, wherein in the event of an accident-related backward movement of the front axle carrier (1), as a result of a collision, the latter can be supported on the front support area (15') of the load transfer element (10), whose rear support area (15) can be supported at least indirectly on the longitudinal member (19), wherein the front axle carrier (1) consists of at least two front axle longitudinal members (1', 1"), of which in each case one, assigned to each vehicle side, is attached to the cross-member component (8) via two fastening points, wherein in each case one fastening point is opposite the front support area (15') of the load transfer element (10) in the vehicle longitudinal direction.

2. Energy storage floor assembly according to claim 1, **characterized in that** a gap, in particular a distance of 5 to 10 millimeters, is provided in the vehicle longitudinal direction between the front support area (15') of each load transfer element (10) and the front axle carrier (1) or a front axle carrier fastening.

3. Energy storage floor assembly according to any one of claims 1 to 2, **characterized in that** each load transfer element (10) is attached to a floor element (11) of the storage housing (12), in particular by means of a joining connection.

## Revendications

1. Ensemble de plancher à accumulation d'énergie pour un véhicule automobile à entraînement électrique, qui comprend un dispositif d'accumulation d'énergie électrique, lequel est logé dans un boîtier d'accumulation (12) et disposé sur la face inférieure d'un plancher de véhicule (6), dans lequel au moins un longeron (19) est disposé à l'intérieur du boîtier d'accumulation (12), dont l'extrémité avant, vue dans le sens longitudinal du véhicule (F), est reliée au moins indirectement à un élément de traverse (8) disposé dans la zone d'une structure avant (5), sur lequel est également fixé un support d'essieu avant (1), dans lequel un élément de transfert de charge (10) est inséré entre une zone arrière du support d'essieu avant (1) et l'extrémité avant du longeron (19), qui présente une zone d'appui avant (15') à son extrémité avant et une zone d'appui arrière (15) à son extrémité arrière, dans lequel, lors d'un mouvement de recul du support d'essieu avant (1) dû à un accident, à la suite d'une collision, ce dernier peut s'appuyer sur la zone d'appui avant (15') de l'élément de transfert de charge (10), dont la zone d'appui arrière (15) peut s'appuyer au moins indirectement sur le longeron (19), dans lequel le support d'essieu avant (1) est constitué d'au moins deux longerons d'essieu avant (1', 1"), dont chacun, affecté à un côté du véhicule, est fixé à l'élément de traverse (8) par deux points de fixation, dans lequel chaque point de fixation est opposé à la zone d'appui avant (15') de l'élément de transfert de charge (10) dans la direction longitudinale du véhicule.

2. Ensemble de plancher à accumulation d'énergie selon la revendication 1, **caractérisé en ce qu'**un espace, en particulier une distance de 5 à 10 millimètres, est prévu dans la direction longitudinale du véhicule entre la zone d'appui avant (15') de chaque élément de transfert de charge (10) et le support d'essieu avant (1) ou une fixation de support d'essieu avant.

3. Ensemble de plancher à accumulation d'énergie selon l'une quelconque des revendications 1 à 2, **caractérisé en ce que** chaque élément de transfert de charge (10) est fixé à un élément de plancher (11) du boîtier d'accumulation (12), en particulier au moyen d'un assemblage par liaison.
